# EUROPÄISCHE PATENTSCHRIFT

(11) **EP 2 848 361 B1**
(45) Veröffentlichungstag und Bekanntmachung des Hinweises auf die Patenterteilung: **10.08.2016**
(21) Anmeldenummer: 13184336.9
(22) Anmeldetag: 13.09.2013
(51) Int. Cl.: B60J 1/00

(54) **KABINENWANDABSCHNITT EINER WERKZEUGMASCHINE MIT RAHMENELEMENT UND SCHEIBE**
COVER SECTION OF A MACHINE TOOL WITH A FRAME ELEMENT AND A WINDOW PANE
SECTION DE PAROI DE CABINE D'UNE MACHINE-OUTIL AVEC UN CADRE ET UNE VITRE

(43) Veröffentlichungstag der Anmeldung: 18.03.2015
(73) Patentinhaber: DMG MORI AKTIENGESELLSCHAFT, 33689 Bielefeld (DE); DMG MORI CO., LTD., Yamatokoriyama-shi Nara 639-1160 (JP)
(72) Erfinder: Seitz, Reinhold, 87659 Hopferau (DE); Strebelow, Alexander, 88142 Wasserburg (DE)
(74) Vertreter: MERH-IP Matias Erny Reichl Hoffmann Patentanwälte PartG mbB

(56) Entgegenhaltungen:
- EP-A1- 0 597 624
- EP-A2- 0 705 726
- DE-U1- 20 111 682
- FR-A1- 2 571 091
- US-A- 3 668 808
- US-A- 3 745 709
- US-A- 5 413 397

## Beschreibung

Die vorliegende Erfindung betrifft Insbesondere einen Kabinenwandabschnitt einer Kabinenwand einer numerisch gesteuerten Werkzeugmaschine. Ferner betrifft die Erfindung ein Profilelement und ein aus Profilelementen gebildetes Rahmenelement für eine numerisch gesteuerten Werkzeugmaschine, die weniger komplex aufgebaut sind, kostengünstiger und flexibel fertigbar sind, weniger aufwendig an verschiedene Maschinentypen anpassbar sind, sowie einen geringeren Verschleiß aufweisen.

Im Stand der Technlk sind Kabinen von numerisch gesteuerten Werkzeugmaschlnen bekannt, die über großflächige Fenster mit Sichtscheiben verfügen, durch die das Bedienpersonal den Bearbeitungsvorgang des Werkstücks verfolgen und überprüfen kann. Die Kabinenwandabschnitte einer numerisch gesteuerten Werkzeugmaschine, die ein Fenster aufweisen, müssen für jede Werkzeugmaschine unterschiedlicher Größen und Maschinentypen neu ausgelegt und gesondert gefertigt werden. Dies erhöht die Produktionszeit und die Kosten für die Werkzeugmaschine.

Weiter ist es nachteilig, dass in der Umgebung, in der Werkzeugmaschinen zum Einsatz kommen, beispielsweise Fertigungshallen, unvermeidlich Späne, Schmutz und Staub entstehen. Dieser kann dazu führen, dass über die lange Lebensdauer einer Werkzeugmaschine hinweg, die Fenster und deren Fensterrahmen verschmutzen, verkratzen oder auf sonstige Welse beschädigt werden. Dies kann zu einer schlechteren Sicht durch das Fenster führen, was zu einer Beeinträchtigung der Fertigungsgüte der Werkstücke führen kann, wenn das Bedienpersonal die Arbeitsgänge nicht optimal überwachen kann.

FR 2 571091 A1 zeigt ein Profil, das es erlaubt, Schutzfenster auf Schutzabdeckungen von Werkzeugmaschinen anzubringen, wobei das Profil aus extrudiertem oder gegossenem synthetischem Kunststoff die Form eines *h* hat, dessen Vorderseite in einer horizontalen Lasche endet und dessen Rückseite die Form eines offenen U hat und in einer weiteren horizontalen Lasche endet, so dass das Profil durch Elastizität das Fenster gegen einen vertikalen Flügel eines Basisprofils drückt, das in den Rahmen der Schutzabdeckung integriert ist.

Es ist eine Aufgabe der vorliegenden Erfindung, eine Kabinenwand einer numerisch gesteuerten Werkzeugmaschine derart auszubilden, dass sie kostengünstig herstellbar ist, weniger aufwendig an verschiedene Maschinentypen und -größen anpassbar ist, sowie einen geringeren Verschleiß aufweist bzw. bei Verschleiß der äußeren Fensteroberfläche einfach und kostengünstig gewartet werden kann.

Zur Lösung der Aufgabe der Erfindung wird ein Kabinenwandabschnitt gemäß dem unabhängigen Anspruch vorgeschlagen. Weitere bevorzugte Weiterentwicklungen der Erfindung sind in den abhängigen Patentansprüchen beschrieben.

Die Erfindung betrifft insbesondere einen Kabinenwandabschnitt einer Kabinenwand einer numerisch gesteuerten Werkzeugmaschine, wobei der Kabinenwandabschnitt eine Aussparung (zum Einsehen des Bearbeitungsraums der Maschine) und eine zumindest teilweise transparente Scheibe aufweist, wobei die Scheibe mittels eines oder mehrerer Schienenelemente derart an dem Kabinenwandabschnitt befestigt ist, dass die Scheibe die Aussparung in dem Kabinenwandabschnitt bedeckt.

Die Scheibe des Kabinenwandabschnitts kann im Bereich der Aussparung den Bearbeitungsraum der Werkzeugmaschine begrenzen, und ist deshalb bei Betrieb der Maschine gegebenenfalls direktem Späneflug und/oder Kühlflüssigkeit ausgesetzt und ist somit äußerst stabil und robust auszubilden und fest an der Kabinenwand zu fixieren.

Des Weiteren ist erfindungsgemäß ein scheibenförmiges Element (Außenfensterelement) auf einer maschinenabgewandten (dem Bearbeitungsraum abgewandt) Seite der Scheibe angeordnet und ein aus Profilelementen gebildetes Rahmenelement (Rahmenkörper) ist an dem Kabinenwandabschnitt befestigt, wobei das Rahmenelement das scheibenförmige Element hält und das scheibenförmige Element lösbar an dem Rahmenelement befestigt ist.

Das scheibenförmige Element, welches zumindest teilweise transparent ist, erlaubt ein Einsehen in den Bearbeitungsraum von außen durch das scheibenförmige Element und die Scheibe und schützt weiterhin vorteilhaft die Scheibe vor Verschleiß von außen. Jedoch kann das scheibenförmige Element selbst kostengünstig und weniger robust als die Scheibe ausgebildet sein, da das scheibenförmige Element durch die Scheibe vor Spänen und Kühlflüssigkeit aus dem Bearbeitungsraum geschützt ist.

Sollte ein Einsehen in den Bearbeitungsraum durch Verschleiß von außen erschwert sein, muss nicht die robuste und fest fixierte Scheibe ausgewechselt werden, sondern es ist ausreichend, das kostengünstig herstellbare scheibenförmige Element auszutauschen, was durch die lösbare Verbindung mit dem Rahmen einfach und effizient direkt in der Maschinenhalle ggf. sogar während des Betriebs der Werkzeugmaschine durchgeführt werden kann, so dass keine Standzeiten der Maschine auftreten. Außerdem kann sowohl das kostengünstig herstellbare scheibenförmige Element als auch das vorteilhaft aus einzelnen Profilelementen herstellbare Rahmenelement einfach und kostengünstig für verschiedene Maschinengrößen und Maschinentypen hergestellt werden.

Erfindungsgemäß ist das scheibenförmige Element mit dem Rahmenelement mittels einer Klettverschlussverbindung lösbar befestigt. Somit kann das scheibenförmige Element im Bedarfsfall schnell und durch ungeschultes Personal (z.B. direkt durch einen einfachen Benutzer der Werkzeugmaschine, der keine Erfahrung in Maschinenwartung hat) ausgetauscht werden.

Gemäß einem weiteren Aspekt kann ein Profilelement zur Bildung eines (bzw. des vorstehend genannten) Rahmenelementes für eine Kabinenwand einer numerisch gesteuerten Werkzeugmaschine bereitgestellt werden. Ein Querschnitt des Profilelementes kann zumindest einen Aufnahmeabschnitt zur Aufnahme eines ersten Befestigungselementes aufweisen. Weiter kann der Querschnitt des Profilelementes zumindest einen bogenförmigen Abschnitt und zumindest einen Verbindungsabschnitt zur Verbindung des Fensterrahmens mit der Kabinenwand der Werkzeugmaschine aufweisen. Der bogenförmige Abschnitt kann zwischen dem Aufnahmeabschnitt und dem Verbindungsabschnitt angeordnet sein.

Die verschiedenen Abschnitte des Querschnitts des Profilelementes sind dabei bevorzugt entlang der Querschnittrichtung angeordnet. Der Begriff bogenförmige bedeutet im Wesentlichen, dass dieser Abschnitt des Querschnittes des Profilelementes eine nicht vollständig ebene Form aufweist. Bevorzugt weist der bogenförmige Abschnitt des Querschnittes des Profilelementes zumindest eine im Wesentlichen bogenartig geformte Abweichung von einer ebenen Form auf bzw. einen Bogen. Selbstverständlich können auch mehrere bogenförmige Abweichungen/Strukturen vorgesehen sein. Die genaue Formgebung des Bogens Ist bevorzugt rundlich und/oder wird von zumindest einem Radius gebildet. Die Bogenform Ist nicht zwingend kreisrurundlich

Verbindungsabschnitt soll im Wesentlichen und bevorzugt bedeuten, dass dieser Abschnitt des Querschnittes des Profilelementes zur Verbindung des Profilelementes beispielsweise mit einer Wand einer Werkzeugmaschinenkabine geeignet ist. Aufnahmeabschnitt soll im Wesentlichen und bevorzugt bedeuten, dass dieser Abschnitt des Querschnittes des Profilelementes zumindest ein Element hält bzw, ein Element daran angeordnet ist, das zur Ausbildung einer Befestigungsverbindung beispielsweise einer Scheibe mit dem Profilelement geeignet ist.

Ferner ist anzumerken, dass die Kabinenwand der Werkzeugmaschine, an der das Profilelement befestigt werden kann, sowohl eine feste Wand der Kabine sein kann als auch eine Tür der Kabine, die den Zugang zum Kabineninneren ermöglichen kann.

Die Vorteile der Formgebung des Querschnittes des Profilabschnittes sind, dass eine hohe Formsteifigkeit auch bei geringer Profildicke gewährleistet ist, so dass weniger Materialeinsatz notwendig ist. Weiter weist der Querschnitt jeweils außenseitig entlang der Querschnittrichtung Abschnitte auf, die zur Befestigung des Profilelementes an und/oder mit anderen Teilen, wie z.B. einer Kabinenwand einer Werkzeugmaschine, Sichtscheiben, etc., vorgesehen sind und dazwischen den bogenförmigen Abschnitt. Insbesondere aufgrund der Formgebung des bogenförmigen Abschnitts weist das Profilelement in Querschnittrichtung eine zumindest kleine Federwirkung auf, die, insbesondere bei Anordnung des bogenförmigen Abschnittes erfindungsgemäß zwischen Aufnahme- und Verbindungsabschnitt, mechanische Verspannungen entgegenwirkt, die z.B. beim Befestigen des Profilelementes an einer Werkzeugmaschine erzeugt werden könnten. Weiter bietet die elastische Federwirkung des bogenförmigen Abschnittes auch eine optimale Anpassbarkeit (zumindest hinsichtlich kleinerer Anpassungen) des Profilelementes an die äußere Form eines Teils, an dem das Profilelement befestigt werden soll.

Ferner kann das Profilelement zumindest zwei Verbindungsabschnitte haben. Jeweils ein Verbindungsabschnitt kann am äußeren Ende des Querschnitts des Profilelementes angeordnet sein. Die Verbindungsabschnitte können jeweils teilweise eben geformt sein.

Teilweise eben geformt bedeutet insbesondere, dass zumindest ein Teilabschnitt in Querschnittrichtung des Verbindungsabschnittes eben geformt ist. Die ebene Formgebung ermöglicht, dass eine Befestigung des Profilelementes an einer Kabinenwand einer Werkzeugmaschine wenig aufwendig möglich ist.

Weiter kann jeweils an den beiden Enden des bogenförmigen Abschnitts optional zumindest ein geknickter Abschnitt angeordnet sein. Der geknickte Abschnitt kann derart ausgebildet sein, dass dieser mit einer Kabinenwand der Werkzeugmaschine oder einem Fensterelement in Verbindung bringbar sein kann. Geknickter Abschnitt bedeutet im Wesentlichen, dass diese optionalen Abschnitte eine Biegung bzw. Verformung aufweisen, die einen relativ kleinen Radius und/oder relativ spitzen Winkel umfasst. Der Begriff "geknickt" soll dabei die Herstellungsweise dieses Abschnitts nicht auf ein Knicken oder Biegen begrenzen. Vielmehr soll damit die grobe phänotypische Form des Abschnittes aufgezeigt werden.

Die Vorteile des Bogens sind, dass, wie oben erläutert wurde, insbesondere eine Federwirkung des bogenförmigen Abschnitts erhalten wird. Ferner erlauben die geknickten Abschnitte, dass ein definierter Übergang zwischen dem bogenförmigen Abschnitt und den seitlich sich dazu anschließenden Abschnittes des Querschnitts vorhanden ist, der beispielsweise dazu nutzbar ist, dass an dem geknickten Abschnitt Kabinenwandteile/-abschnitte oder dgl., bevorzugt ohne Spalt, angeordnet werden, so dass eine Dichtwirkung erzielbar ist.

Ferner kann auf jeder Seite des bogenförmigen Abschnittes jeweils ein geknickter Abschnitt angrenzen. Auf einer Seite des Querschnitts des Profilelementes kann sich an den geknickten Abschnitt der Aufnahmeabschnitt anschließen, der eben geformt sein kann. Wenn kein geknickter Abschnitt vorgesehen ist, dann kann der Aufnahmeabschnitt direkt an den bogenförmigen Abschnitt angrenzen.

An dem Aufnahmeabschnitt kann höhenversetzt ein erster Verbindungsabschnitt angrenzen, der eben geformt sein kann. Auf der anderen Seite des Querschnitts des Profilelementes kann an den geknickten Abschnitt ein zweiter Verbindungsabschnitt angrenzen - oder, wenn kein geknickter Abschnitt vorgesehen ist, der zweite Verbindungsabschnitt direkt an den bogenförmigen Abschnitt angrenzen. Der zweite Verbindungsabschnitt kann eben geformt sein. Die Verbindungsabschnitte können dazu ausgebildet sind, ein Dichtelement zu halten und/oder ein Verbindungsmittel daran anzuordnen.

Diese Formgebung des Querschnitts erlaubt eine verbesserte Befestigung an einer Werkzeugmaschinenkabinenwand ohne komplexe Anpassungsarbeiten. Ein Verbindungsmittel kann z.B. eine Schraube (bzw. Schraubverbindung) sein, eine Niete, etc. Auch ein Klebestreifen kann ein solches Verbindungsmittel sein. Ein Dichtelement kann z.B. ein Gummibauteil sein, das eine Gas- und/oder Flüssigkeitsdichtungswirkung erzeugt.

Die Profilelemente können Metallbleche sein, bevorzugt tiefgezogene. Ferner können die Profilelemente aus Kunststoff gefertigt sein.

Dünne, bevorzugt tiefgezogene, Metallbleche haben ein relativ geringes Gewicht, sind kostengünstig und können wenig komplex hergestellt werden. Gleiches gilt auch für Kunststoffmaterialien, die beispielsweise mittels Gießen oder Extrudieren herstellbar/formbar sind.

Erfindungsgemäß kann ferner ein Rahmenelement zum Halten einer transparenten Scheibe und/oder eines scheibenförmigen Elementes an einem Kabinenwandabschnitt einer Werkzeugmaschine aus zumindest einem erfindungsgemäßen Profilelement gebildet sein.

Dies hat den Vorteil, dass im Wesentlichen lediglich ein auf eine Kabinenwand angepasster Rahmen (Rahmenkörper bzw. Rahmenelement) zur Befestigung einer Schutzscheibe, wie z.B. der transparenten Scheibe, und/oder des scheibenförmigen Elementes bereitgestellt wird. Die Kabinenwand bzw. die Tür der Kabinenwand muss im Wesentlichen nicht gesondert und aufwendig im Hinblick auf die Form der Scheibe und/oder des scheibenförmigen Elementes angepasst werden. Das Rahmenelement kann aus einem oder mehreren zusammengefügten Profilelementen aufgebaut sein. Dies ist schnell und wenig aufwendig durchführbar. Das scheibenförmige Element kann durchgehend Material aufweisen oder passe-partout-förmig nur in einem Randabschnitt Material aufweisen, so dass ein innerer Abschnitt kein Material aufweist. Weiterhin kann das scheibenförmige Element aus plattenförmigen Einzelelementen zusammengesetzt sein.

Wenn mehrere Profilelemente das Rahmenelement bilden, dann können z.B. bei einem im Wesentlichen rechteckigen Rahmenelement vier Eckabschnitte und vier gerade Kantenabschnitte vorgesehen sein. Insbesondere wenn das Rahmenelement für eine Tür der Kabine vorgesehen ist, kann es auch U-förmig ausgebildet sein, z.B. einteilig oder mit jeweils drei geraden und zwei Eckabschnitten. Der Abschnitt der U-Form, der offen ist, kann z.B. dafür geeignet sein, daran einen Türgriff zum Öffnen der Tür vorzusehen. Eine andere Zusammenstellung ist selbstverständlich auch möglich. Die mehreren Profilelemente können zur Bildung des Rahmenelementes beispielsweise zusammensteckbar sein, miteinander verschweißt oder verklebt werden und/oder mittels Schraub- oder Nietverbindungen verbunden werden. Andere Füge- bzw. Verbindungstechniken sind auch möglich.

Somit kann flexibel und unter Ausnutzung der Vorteile der Formgebung des Querschnitts der erfindungsgemäßen Profilelemente ein Rahmenelement zum sicheren Halten einer Scheibe und/oder eines scheibenförmigen Elementes hergestellt werden.

Erfindungsgemäß kann weiter ein Kabinenwandabschnitt einer numerisch gesteuerten Werkzeugmaschine vorgesehen sein mit zumindest einer Scheibe. Die Scheibe kann derart mit dem Kabinenwandabschnitt verbunden sein, dass die Scheibe eine Aussparung in dem Kabinenwandabschnitt bedecken kann. Ferner kann zumindest ein im Wesentlichen scheibenförmiges Element vorgesehen sein, das auf einer maschinenabgewandten Seite angeordnet sein kann und bevorzugt außenseitig lösbar mit dem Kabinenwandabschnitt verbunden sein kann. Der Kabinenwandabschnitt kann bevorzugt eine Tür der Kabine sein.

Lösbare Verbindung bedeutet, dass insbesondere eine zerstörungsfreie Lösbarkeit gegeben ist. Die Scheibe ist bevorzugt eine transparente Scheibe und besonders bevorzugt eine transparente Sicht- bzw. Schutzscheibe, durch die ein Bediener der Werkzeugmaschine den Arbeitsvorgang im Innenraum der Werkzeugmaschinenkabine beobachten und überwachen kann. Bedeckt bedeutet hier im Wesentlichen, dass die Scheibe in eine Fensteraussparung in der Kabinenwand bzw. Tür einsetzbar oder im Bereich der Aussparung anordnenbar ist, so dass in/an der Aussparung und ggf. darüber hinaus die Scheibe angeordnet ist. Die Scheibe trennt somit zusammen mit der Kabinenwand das Kabineninnere vom Kabinenäußeren.

Das im Wesentlichen scheibenförmige Element kann eine zumindest in Teilabschnitten transparente, durchgängige Scheibe ähnlich bzw. gleich der oben beschriebenen Scheibe sein. Alternativ kann das im Wesentlichen scheibenförmige Element auch eine flache Scheibe sein, die nicht durchgängig Material aufweist. In anderen Worten kann das im Wesentlichen scheibenförmige Element ähnlich einer Rahmenform oder einem Passe-partout geformt sein, d.h. lediglich an den Kantenbereichen Material aufweisen und auf einem innenliegenden Flächenabschnitt eine Aussparung/kein Material aufweisen.

Vorteile dieser Anordnung sind, dass insbesondere eine schnelle und wenig komplexe Montage der Scheibe und auch des im Wesentlichen scheibenförmigen Elements ermöglicht wird. Die Montage ist ferner insbesondere vorteilhaft von einer Außenseite der Werkzeugmaschine möglich. Ferner ist das im Wesentlichen scheibenförmige Element leicht wechselbar und schützt die Scheibe zumindest in einem Randbereich der Scheibe vor kratz- und schmutzbedingten Beeinträchtigungen/Beschädigungen.

Die (transparente) Scheibe kann ferner mittels eines Schienenelementes mit dem Kabinenwandabschnitt verbunden sein. Ein Rahmenelement kann an dem Kabinenwandabschnitt angeordnet sein. Das Rahmenelement kann das im Wesentlichen scheibenförmige Element halten. Das Rahmenelement kann aus zumindest einem der erfindungsgemäßen Profilelemente gebildet sein.

Das Schienenelement kann ein einstückiges oder mehrteiliges Element sein, das aufgrund seiner Formgebung selbst oder in Zusammenwirkung mit der Kabinenwand der Werkzeugmaschine eine nutförmige Struktur ausbildet. In diese nutförmige Struktur kann die Scheibe insbesondere an deren Außenkanten eingeführt sein und dann z.B. mittels einer von dem Schienenelement aufgebrachten Klemmkraft mit der Kabinenwand befestigt sein.

Dieses Verbindungssystem ermöglicht eine wenig aufwendige Herstellung, eine einfache Handhabung im Falle von Wartungsarbeiten und gleichzeitig ermöglicht das im Wesentlichen scheibenförmige Element insbesondere, dass ein Randbereich der Scheibe vor Beschädigungen geschützt ist.

Ferner kann das im Wesentlichen scheibenförmige Element mit dem Rahmenelement mittels einer Klettverschlussverbindung lösbar verbunden sein.

Die Klettverbindung erlaubt eine besonders zeiteffiziente und wenig komplexe, aber zugleich sichere Befestigung des im Wesentlichen scheibenförmigen Elements mit der Kabinenwand bzw. dem Rahmenelement.

Erfindungsgemäß kann ein Kabinenwandabschnitt einer numerisch gesteuerten Werkzeugmaschine vorgesehen sein mit einem Rahmenelement gebildet aus zumindest einem erfindungsgemäßen Profilelement. Ferner kann ein erstes Befestigungselement vorgesehen sein, das an dem Aufnahmeabschnitt des Profilelementes angeordnet sein kann. Eine Scheibe kann vorgesehen sein, die mit dem Rahmenelement verbunden sein kann. Weiter kann ein im Wesentlichen scheibenförmiges Element, wie es oben beschrieben wurde, vorgesehen sein, das ein zweites Befestigungselement aufweisen kann, das dazu ausgebildet sein kann, mit dem ersten Befestigungselement eine lösbare form- und/oder stoffschlüssige Verbindung zu bilden. Das im Wesentlichen scheibenförmige Element kann außenseitig lösbar mit dem Kabinenwandabschnitt mittels der ersten und zweiten Befestigungsmittel verbunden sein.

Insbesondere ist es ein Vorteil dieser Anordnung, dass die Scheibe und das im Wesentlichen scheibenförmige Element und deren Haltevorrichtungen wenig aufwendig an der Kabinenwand montiert werden können. Das im Wesentlichen scheibenförmige Element schützt insbesondere einen Kantenabschnitt der Scheibe, die maschinenseitig weiter innenliegt, vor Beschädigung. Das im Wesentlichen scheibenförmige Element kann ferner wenig aufwendig und schnell austauchbar befestigt werden. Der bogenförmige Abschnitt des Profilelementes weißt eine Elastizität auf, die ermöglicht, das scheibenförmige Element in zumindest geringem Maße federnd zu halten, so dass keine mechanischen Verspannungen auftreten.

Ferner kann zumindest ein Dichtungselement an einem Verbindungsabschnitt angeordnet sein. Der Verbindungsabschnitt kann zusammen mit dem Dichtungselement in Eingriff mit einer Nut, die an einer Kabinenwand der Werkzeugmaschine angeordnet sein kann, stehen.

Die Nut wird entweder mittels eines gesonderten Elementes, das an der Kabinenwand befestigt ist, alleine oder in Zusammenwirkung mit einem Abschnitt der Kabinenwand erzeugt. Ferner kann die Nut auch in der Kabinenwand, d.h. ohne ein gesondertes Element, vorgesehen sein. Das Dichtelement und der Verbindungsabschnitt können innerhalb der Nut angeordnet sein und eine gas- und/oder feuchtigkeitsdichte Verbindung mit der Kabinenwand herstellen.

Diese Verbindung zwischen Profilelement/Rahmenelement und Kabinenwand ist schnell und wenig aufwendig herstellbar. Der Maschinen- bzw. Kabineninnenraum wird gleichzeitig vor Schmutzeintritt oder dgl. geschützt.

Ferner können die Befestigungselemente Klettverschlusselemente sein. Jeweils das erste und das zweite Befestigungselement können bevorzugt ein zum ersten oder zweiten Befestigungselement zugeordnetes Gegenstück sein, so dass eine Klettverschlussverbindung bildbar sein kann.

Die Klettverbindung erlaubt eine besonders zeiteffiziente und wenig komplexe, aber zugleich sichere Befestigung des im Wesentlichen scheibenförmigen Elementes mit der Kabinenwand bzw. dem Rahmenelement.

Ferner kann zumindest einer der Verbindungsabschnitte der Profilelemente mittels einer Schraubverbindung mit der Kabinenwand verbunden sein. Bevorzugt kann ein Verbindungsabschnitt des Profilelementes die Schraubverbindung aufweisen und ein weiterer Verbindungsabschnitt in die Nut eingreifen.

Eine Verbindung des Profilelementes/Rahmenelementes mittels einer Schraubverbindung auf einer Seite der Querschnitts des Profilelementes und mittels Eingriff in eine Nut (vergleichbar einer Nut-Feder-Verbindung) ermöglicht eine sichere Verbindung mit der Kabinenwand unter Verwendung möglichst weniger Arbeitsschritte. Es kann z.B. auch auf eine Schweißverbindung, die sowohl aufwendig als auch im Hinblick auf den möglichen Verzug der Bauteile schwieriger durchzuführen ist, verzichtet werden - obwohl eine Schweißverbindung nicht ausgeschlossen wird, z.B. wenn eine sehr dauerhafte Verbindung angestrebt wird.

Ferner kann die Scheibe eine Aussparung der Kabinenwand bedecken. Die bevorzugt transparente Scheibe kann an den Rändern der Aussparung mittels eines Schienenelementes, dass eine weitere Nut zur Aufnahme einer Kante der transparenten Scheibe aufweisen kann, mit der Kabinenwand verbunden sein. Das Schienenelement kann bevorzugt mittels einer Klebe- und/oder Schraubverbindung mit der Kabinenwand befestigbar sein.

Die Befestigung des Schienenelementes wird besonders bevorzugt mittels einer Klebeverbindung ausgeführt, da dies eine sehr schnell und wenig aufwendig ausführbare sowie langlebige Verbindung ermöglicht.

Ferner können ein weiteres Befestigungsmittel und ein weiteres Dichtungselement an dem Schienenelement angeordnet sein. Das Schienenelement kann benachbart zu dem Rahmenelement an der Kabinenwand befestigt sein. Das im Wesentlichen scheibenförmige Element kann auf einem Abschnitt des Schienenelementes und des Aufnahmeabschnittes des Rahmenelementes angeordnet sein. Ferner kann das im Wesentlichen scheibenförmige Element mittels der Befestigungsmittel, die jeweils an dem Rahmenelement und dem Schienenelement vorgesehen sein kann, lösbar mit dem Rahmenelement und dem Schienenelement befestigt sein. Das im Wesentlichen scheibenförmige Element kann derart befestigt sein, dass es auf dem ersten Befestigungselement und auf einem der geknickten Abschnitte des Rahmenelementes und auf dem weiteren Befestigungselement und dem weiteren Dichtungselement, die an dem Schienenelement angeordnet sein können, aufliegen kann.

Bei dieser Anordnung kann das im Wesentlichen scheibenförmige Element, insbesondere der Randbereich dieses Elementes, maschinenaußenseitig oberhalb eines Randabschnittes der Scheibe und teilweise auf dem Schienenelement und dem Rahmenelement aufliegen und überdeckt diese zumindest teilweise, wenn von maschinenaußenseitig auf die Anordnung geschaut wird. Somit wird zumindest der Randbereich der Scheibe vor Beschädigung geschützt, wenn das scheibenförmige Element passe-partout-förmig ist.

Wenn das scheibenförmige Element vollflächig Material aufweist, dann wird die ganze Scheibe bedeckt und geschützt. Die Scheibe und das im Wesentlichen scheibenförmige Element sind von der Maschinenaußenseite aus wenig aufwendig wart- und wechselbar. Insbesondere wenn ein Mittelbereich der Fläche des im Wesentlichen scheibenförmigen Elementes kein Material aufweist (d.h. eine Passe-partout-Form des im Wesentlichen scheibenförmigen Elementes vorliegt), dann wird insbesondere der Befestigungsbereich der Scheibe vor Beschädigungen geschützt bedeckt. Das Element bleibt aber leicht und kostengünstig aufgrund der Aussparung der Innenfläche. Wenn das im Wesentlichen scheibenförmige Element intransparent, z.B. schwarz oder weiß gefärbt ist, und passe-partout-förmig ist, dann wird der Befestigungsbereich zudem auch optisch verbessert, da verdeckt.

Das scheibenförmige Element kann einstückig ausgebildet sein oder auch aus Einzelelementen zusammengesetzt sein. Wenn das scheibenförmige Element passe-partout-förmig ist, kann das scheibenförmige Element insbesondere aus einzelnen Plattenelementen zusammengesetzt sein.

Weiter kann das im Wesentlichen scheibenförmige Element einen Innenabschnitt aufweisen, der transparent sein kann oder besonders bevorzugt gar kein Material aufweisen kann und einen Randabschnitt, der intransparent sein kann. Der Randabschnitt kann bevorzugt schwarz oder weiß gefärbt sein.

Dies ermöglicht, dass das im Wesentlichen scheibenförmige Element leicht und kostengünstig ist und gleichzeitig Befestigungsbereiche der Scheibe u.a. auch optisch verdeckt.

Weiter kann ein Abschnitt des Rahmenelementes im Bereich des bogenförmigen Abschnitts eine Aussparung zur Aufnahme von im Wesentlichen plattenförmigen Elementen aufweisen.

Eine solche Aussparung kann z.B. zum Befestigen eines plattenförmigen Elementes, umfassend Schilder oder Embleme, mittels einer Einsteckverbindung geeignet sein. Das Schild kann z.B. sicherheitsrelevante Hinweise, Typenbezeichnungen, Herstellernamen, etc. anzeigen. Auch kann ein Schild, die Aussparung bedeckend, beispielsweise mittels einer Klebeverbindung mit dem Profilelement verbunden sein.

Die Scheibe kann bevorzugt aus Glass und besonders bevorzugt aus Sicherheitsglass und ganz besonders bevorzugt aus Polykarbonat bestehen. Das im Wesentlichen scheibenförmige Element kann bevorzugt aus Glass order Kunststoff, besonders bevorzugt aus PMMA, bestehen.

Weiter kann bevorzugt sein, dass der bogenförmige Abschnitt nicht von der Scheibe oder dem im Wesentlichen scheibenförmigen Element zur Maschinenaußenseite hin verdeckt wird, d.h. dieser Bereich nach außen sichtbar angeordnet ist.

Zusammenfassend ermöglicht die Erfindung somit, dass ein Profilelement zur Bildung eines Rahmenelementes, ein Rahmenelement und ein Kabinenwandabschnitt mit dem Rahmenelement einer numerisch gesteuerten Werkzeugmaschine bereitgestellt wird, die weniger komplex aufgebaut sind, kostengünstiger fertigbar sind, weniger aufwendig an verschiedene Maschinentypen anpassbar sind, sowie weniger schnell verschleißen.

Die Erfindung wird im Folgenden exemplarisch mit Bezug auf die beigefügten, schematischen Zeichnungen beschrieben. Es zeigen
Fig. 1 eine perspektivische Ansicht einer numerisch gesteuerten Werkzeugmaschine und eine vergrößerte Schnittansicht A durch einen Teil der vorderseitigen Kabinenwand der Werkzeugmaschine,
Fig. 2 eine Frontansicht der vorderseitigen Kabinenwand mit einem erfindungsgemäßen Rahmenelement,
Fig. 3 eine perspektivische Ansicht der vorderseitigen Kabinenwand mit vergrößerten Ausschnittansichten,
Fig. 4 einen Abschnitt der vorderseitigen Kabinenwand und Schnittdarstellungen durch das erfindungsgemäße Rahmenelement,
Fig. 5 ein erfindungsgemäßes Profilelement,
Fig. 6 Schnitt-Detailansichten der Anordnung der erfindungsgemäßen Profilelemente zu der Kabinenwand,
Fig. 7 einen weiteren Abschnitt der Kabinenwand mit einer weiteren Schnittansicht des erfindungsgemäßen Rahmenelementes,
Fig. 8 eine perspektivische Ansicht des erfindungsgemäßen Rahmenelementes, und
Fig. 9 eine Vorderansicht des erfindungsgemäßen Rahmenelementes mit einzelnen Vergrößerungen.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

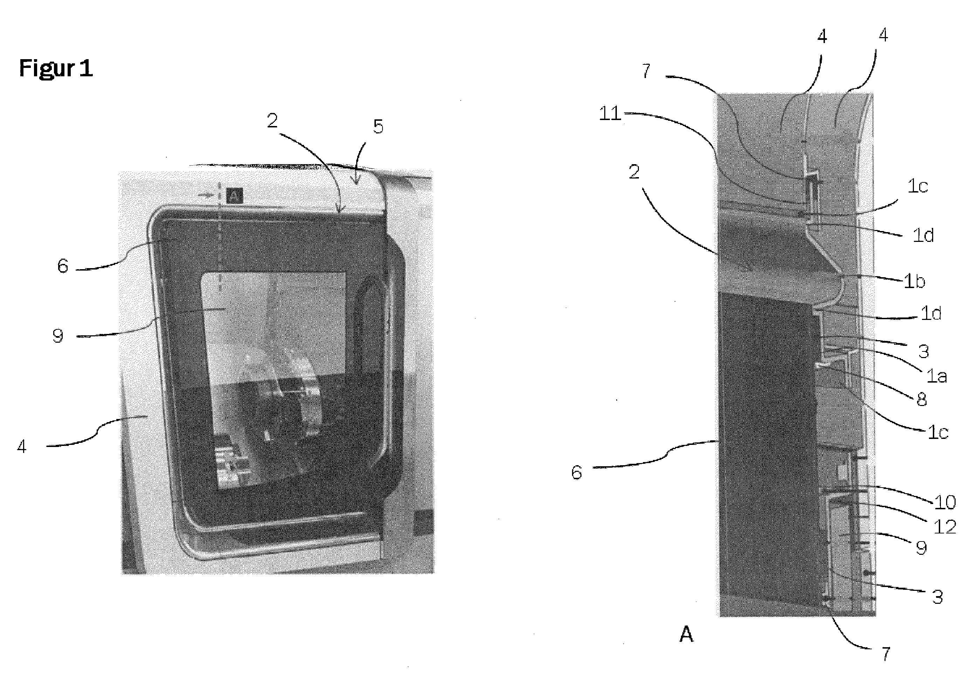

Fig. 1 zeigt einen vorderen Kabinenwandabschnitt 4 einer Werkzeugmaschine 5 und insbesondere die Tür einer Kabine, an der ein Rahmenelement 2 angeordnet ist, das ein im Wesentlichen scheibenförmiges Element 6 hält. Die Kabinenwand(-abschnitt) bzw. die Tür 4 weist eine Aussparung auf, die von einer transparenten Scheibe 9 bedeckt wird. Wie sich der linken Darstellung der Fig. 1 entnehmen lässt, verläuft das Rahmenelement 2 U-förmig sowohl an einer Ober- und Unterkante als auch an einer Seitenkante des scheibenförmigen Elementes 6 entlang. An der in der Figur rechts dargestellten Kante des scheibenförmigen Elementes 6 ist ein Griff vorgesehen. Die gestrichelte Linie, die mit dem Buchstaben A gekennzeichnet ist, zeigt den Verlauf der rechts in Fig. 1 dargestellten Schnittdarstellung "A" der Kabinenwand bzw. Tür 4 an.

Der Querschnitt A in Figur 1 zeigt das scheibenförmige Element 6, das im Bereich einer Unterkante des scheibenförmigen Elementes 6 an einem Schienenelement 10 mit der Kabinenwand 4 befestigt ist. In einem Abschnitt im Bereich einer Oberkante des im Wesentlichen scheibenförmigen Elementes 6 ist das Rahmenelement 2 zwischen der Kabinenwand 4 und dem im Wesentlichen scheibenförmigen Element 6 angeordnet. Der Querschnitt zeigt die Befestigungsmittel 3, die das scheibenförmige Element 6 mit dem Rahmenelement 2 und dem Schienenelement 10 lösbar verbinden.

Die dargestellten Befestigungsmittel 3 sind bevorzugt jeweils zweiteilig ausgeführt, wovon ein Teil an dem im Wesentlichen scheibenförmigen Element 6 und ein weiterer Teil an dem Rahmenelement 2 bzw. dem Schienenelement 10 angeordnet ist. Die bevorzugt zweiteilige Ausführung der Befestigungsmittel 3 erlaubt, dass das eine Teil ein Gegenstück zu dem zweiten Teil darstellt, um eine ineinandergreifende Verbindung zwischen den beiden Teilen zu ermöglichen. Die in Fig. 1 schematisch dargestellten Befestigungsmittel 3 stellen eine Klettverschlussverbindung dar, wobei die beiden Teile jeweils gegenstückige Teile einer Klettverschlussverbindung sind. Die Klettverschlussverbindung erlaubt vorteilhaft, das im Wesentlichen scheibenförmige Element 6 schnell und wenig komplex mit der Kabinenwand 4 zu verbinden.

Wie der Querschnitt gemäß Fig. 1 weiter zeigt, wird die transparente Scheibe 9 in einer Nut 12, die zwischen der Kabinenwand 4 und dem Schienenelement 10 angeordnet ist, gehalten. Dies erfolgt beispielsweise mittels einer Klemmverbindung oder zum Beispiel auch einer Klebeverbindung. Nut-außenseitig ist an dem Schienenelement 10 das oben beschriebene Befestigungsmittel 3 angeordnet, das einen unteren Abschnitt des im Wesentlichen scheibenförmigen Elementes 6 hält. Weiterhin kann im Bereich einer Unterkante des im Wesentlichen scheibenförmigen Elementes 6 zwischen dem Schienenelement 10 und dem im Wesentlichen scheibenförmigen Element 6 ein Dichtungsmittel 7 angeordnet sein. Das dort angeordnete Dichtungsmittel 7 ist bevorzugt eine Gummilippe.

Das in Fig. 1 im Querschnitt dargestellte Rahmenelement 2 umfasst zumindest ein Profilelement 1. Dieses Profilelement 1 weist eine dreidimensional geformte Struktur auf, die in eine Vielzahl Unterabschnitte gegliedert ist.

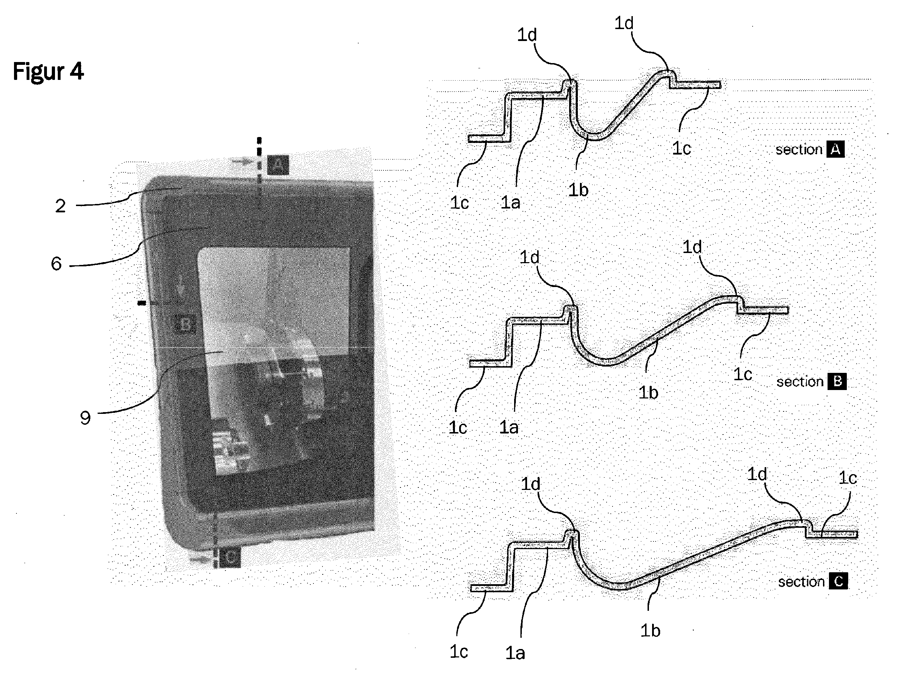

Die Form des Profilelementes 1 weist, wie in Fig. 1 und noch deutlicher in Figur 4 dargestellt ist, einen Aufnahmeabschnitt 1a auf, an dem eines der Befestigungsmittel 3 angeordnet ist. Der Aufnahmeabschnitt 1a ist ein gerader, bzw. zumindest teilweise gerade verlaufender Abschnitt, der an einen Verbindungsabschnitt 1c angrenzt. Der Verbindungsabschnitt 1c weist Einrichtungen auf, die das Verbinden dieses Verbindungsabschnittes 1c mit der Kabinenwand 4 ermöglicht. In Fig. 1 ist beispielhaft die Befestigung des Verbindungsabschnittes 1c mittels einer Schraubverbindung 8 gezeigt. Den Schnitt durch das Profilelement 1 betrachtend ergibt sich, dass der Aufnahmeabschnitt 1a und der sich daran anschließende Verbindungsabschnitt 1c stufenförmig zueinander angeordnet sind. An den Aufnahmeabschnitt 1a grenzt gegenüber dem Verbindungsabschnitt 1c ein geknickter Abschnitt 1d an, der wie in Fig. 1 dargestellt, in Kontakt mit einer Oberkante des im Wesentlichen scheibenförmigen Elementes 6 steht. An diesen geknickten Abschnitt 1d schließt sich ein bogenförmiger Abschnitt 1b an, der im Wesentlichen die Form eines umgedrehten Fragezeichens bzw. eines nicht vollständigen S aufweist, an.

Der bogenförmige Abschnitt 1b hat insbesondere den Vorteil, dass aufgrund seiner Formgebung eine leichte Federwirkung erreicht wird, die das elastische Halten des scheibenförmigen Elementes 6 ermöglicht. An den bogenförmigen Abschnitt 1b schließt sich ein weiterer geknickter Abschnitt 1d an, an den ein weiterer Verbindungsabschnitt 1c angrenzt. Dieser Verbindungsabschnitt 1c greift in die mit Referenzzeichen 11 dargestellte Nut zwischen einem Blech, das an der Kabinenwand 4 befestigt ist oder von der Kabinenwand 4 selbst gebildet wird, und der Kabinenwand 4 ein. Ein Dichtungselement 7 ist um eine Endkante des Profilelementes 1 bzw. des Verbindungsabschnittes 1c herum angeordnet, um eine fluiddichte Verbindung zwischen dem Verbindungsabschnitt 1c und der Kabinenwand 4 herzustellen.

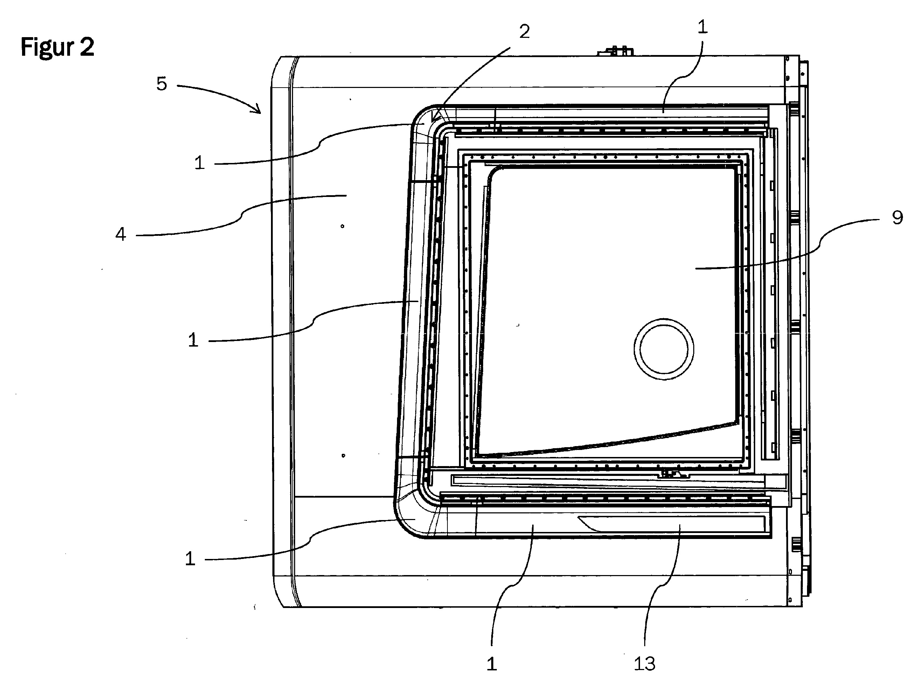

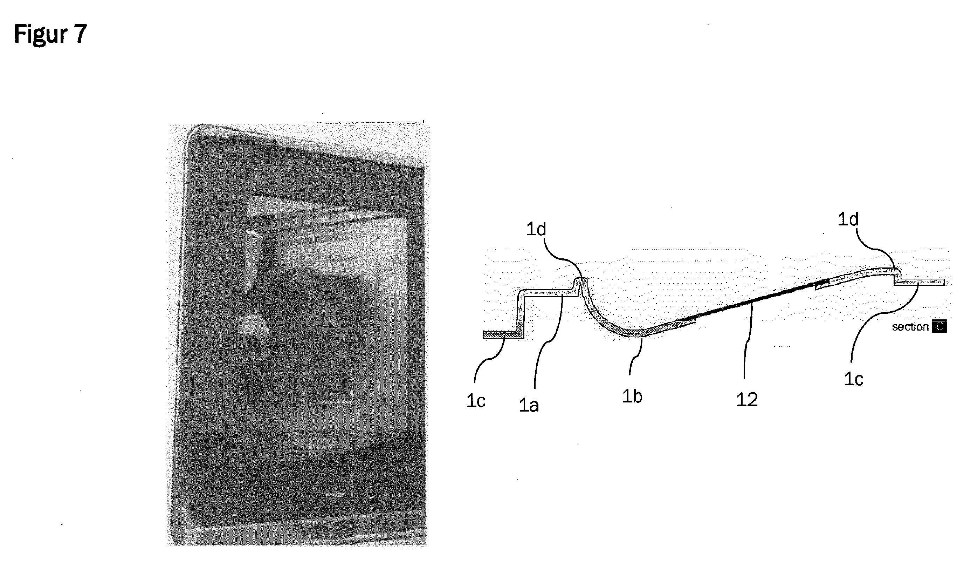

Weiterhin zeigt die Fig. 2 eine Frontansicht einer Kabinenwand 4, insbesondere der Tür, der Werkzeugmaschine 5. Weiterhin sind das Rahmenelement 2, das aus einer Vielzahl Profilelemente 1 gebildet ist, und die die Aussparung bedeckende, transparente Scheibe 9 dargestellt. Das im Wesentlichen scheibenförmige Element 6, das passe-partout-förmig in einem innenflächigen Bereich kein Material aufweist, ist in Fig. 2 nicht gezeigt bzw. demontiert. Weiterhin zeigt die Fig. 2 ein plattenförmiges Element 13, das zum Beispiel ein Emblem sein kann. Dieses plattenförmige Element 13 ist in eine in Figur 7 gezeigten Aussparung 12 im Profilelement 1 eingesetzt. Dies kann zum Beispiel mittels einer Steckverbindung oder eine Klebeverbindung realisiert werden.

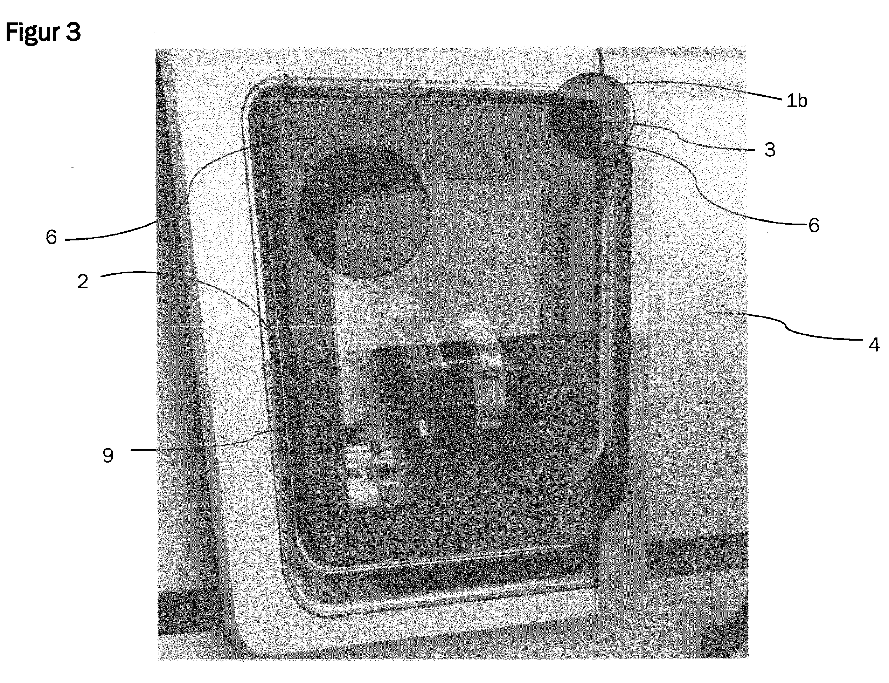

Fig. 3 zeigt eine weitere perspektivische Ansicht einer Werkzeugkabinenwand 4 mit zwei vergrößerten Darstellungen im Bereich des im Wesentlichen scheibenförmigen Elementes 6. Aus der Fig. 3 lässt sich entnehmen, dass die transparente Scheibe zwischen einer Innenseite der Werkzeugmaschinenkabine und dem scheibenförmigen Element 6 angeordnet ist. Außenseitig zur transparenten Scheibe 9 ist das im Wesentlichen scheibenförmige Element 6 angeordnet, das wie in Fig. 3 dargestellt, in einem innenflächigen Bereich kein Material aufweist, so dass es im Wesentlichen die Form eines Passepartouts aufweist. Im Bereich des Übergangs zwischen der transparenten Scheibe 9 und dem im Wesentlichen scheibenförmigen Element 6, wie die Vergrößerung darstellt, ist im Bereich einer Unterkante des im Wesentlichen scheibenförmigen Elementes 6 die Gummidichtlippe 7 vorgesehen, die den Spalt zwischen der transparenten Scheibe 9 und dem im Wesentlichen scheibenförmigen Element 6 nach außen fluiddicht abdichtet. Weiterhin zeigt die weitere Vergrößerung in der Fig. 3 nochmals die Befestigung des im Wesentlichen scheibenförmigen Elementes 6 mittels des Befestigungsmittels 3, bevorzugt einem Klettverschluss, mit dem Rahmenelement 2.

Fig. 4 zeigt einen Abschnitt der Kabinenwand 4 bzw. der Tür und insbesondere das Rahmenelement 2 mit der transparenten Scheibe 9 und dem im Wesentlichen scheibenförmigen Element 6. Wie bereits oben beschrieben wurde, kann das rahmenförmige Element 2 aus einem einstückigen Profilelement 1 aufgebaut sein oder mehrere Profilelemente 1 aufweisen. Der Vorteil des Aufbaus des Rahmenelementes 2 aus einer Vielzahl von Profilelementen 1 ist, dass der Querschnitt der jeweiligen Profilelemente 1 leicht hinsichtlich seiner Form an die äußeren Konturen der Kabinenwand 4 angepasst werden kann. So zeigt die Fig. 4 drei Schnitte A, B, C durch das Rahmenelement 2 an drei verschiedenen Stellen des Rahmenelementes 2. Daraus ergibt sich, wie in den rechts in Fig. 4 dargestellten Schnittansichten dargestellt ist, dass die jeweilige Grundform des Profilelementes 1 im Wesentlichen gleich ist. Allerdings variiert die Länge des Profilelementes 1 der verschiedenen Profilelemente 1, sowie auch deren Radien, insbesondere im Bereich des bogenförmigen Abschnittes 1b. Der Querschnitt durch das Profilelement 1 an der Stelle A zeigt insbesondere ein relativ kurzes Profilelement 1 mit einem stark ausgebauchten, bogenförmigen Abschnitt 1b. Dies ermöglicht insbesondere eine besonders gute Federwirkung beim Halten des scheibenförmigen Elementes 6. Das Profilelement 1, das an einer linken Seitenkante des Rahmenelementes 2, konkret der Position B, angeordnet ist, zeigt hingegen ein Profilelement 1 mit einer mittleren Länge im Vergleich zu den beiden anderen Profilelementen 1. Das an der Unterkante des Rahmenelementes 2 angeordnete Profilelement 1 weist weiterhin einen relativ langen Querschnitt auf, mit einem deutlich weniger stark ausgebauchten, bogenförmigen Abschnitt 1b. Allen gezeigten Profilelementen 1 ist gemein, dass sich rechts und links in Querschnittrichtung zu dem bogenförmigen Abschnitt 1b, jeweils ein geknickter Abschnitt 1d anschließt. Auf einer in der Fig. 4 rechts dargestellten Seite des bogenförmigen Abschnitts 1b schließt sich an den geknickten Abschnitt 1d ein Verbindungsabschnitt 1c an. Auf einer linken Seite schließt sich treppenförmig angeordnet zunächst an den geknickten Abschnitt 1d ein Aufnahmeabschnitt 1a und dann ein Verbindungsabschnitt 1c an.

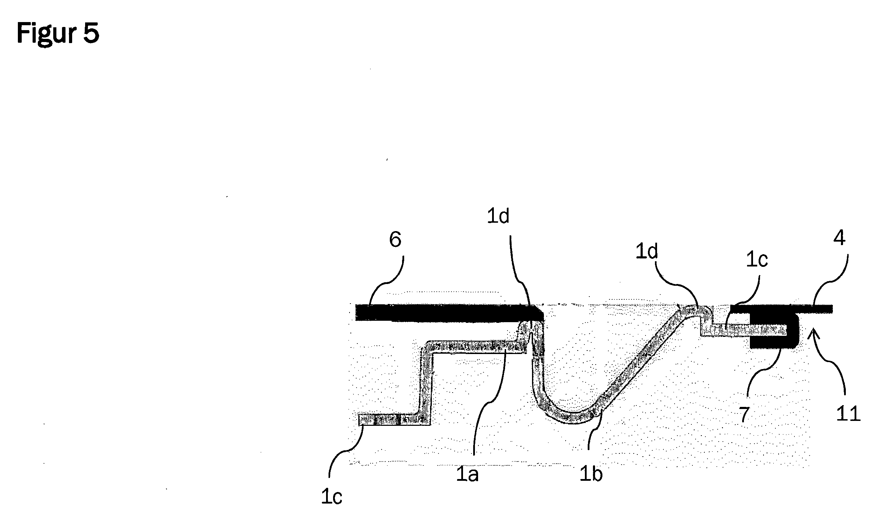

Im Wesentlichen zeigt die Fig. 5 nochmals das Profilelement 1 mit den zuvor beschriebenen Abschnitten 1a bis 1d. Weiterhin zeigt die Fig. 5 schematisch die Anordnung der geknickten Abschnitte 1d zu dem scheibenförmigen Element 6 und dem die Nut 11 bildenden Metallblech bzw. Teil der Kabinenwand 4. Weiterhin ist dargestellt, wie das Dichtungselement 7, das eine U-Form aufweist, um den Endbereich des Verbindungsabschnittes 1c, der in die Nut 11 eingreift, angeordnet ist, um eine fluiddichte Verbindung zwischen Nut 11 und Profilelement 1 zu ermöglichen. Eine Dichtung zwischen dem dargestellten Abschnitt des im Wesentlichen scheibenförmigen Elementes 6 und dem Profilelement 1 ist, wie in Fig. 5 dargestellt, dadurch ausgeführt, dass der geknickte Abschnitt 1d direkt in Kontakt mit einer maschinenseitig angeordneten Oberfläche des im Wesentlichen scheibenförmigen Elementes 6 steht. Weiterhin ist in Fig. 5 schematisch eine Durchgangsbohrung im links dargestellten Verbindungsabschnitt 1c zur Aufnahme eines Verbindungsmittels, zum Beispiel einer Schraube oder eines Bolzens, dargestellt.

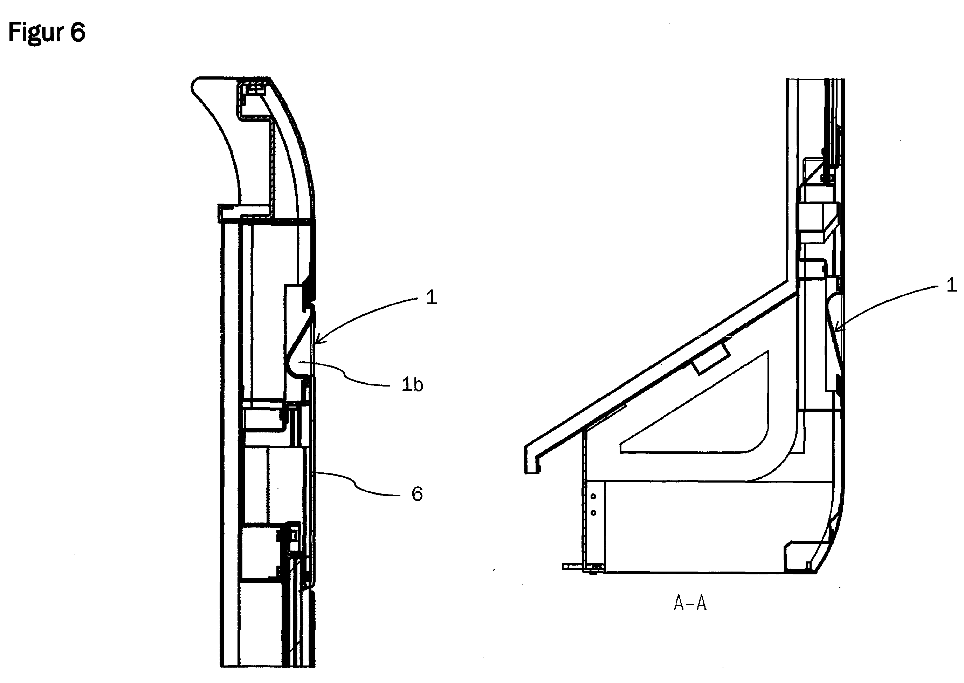

Fig. 6 zeigt weitere Detailansichten eines Schnittes durch die Kabinenwand 4, aus denen sich insbesondere die Anordnung des Profilelementes 1 bzw. des Rahmenelementes 2 entnehmen lassen. In einer weiteren Schnittdarstellung durch einen unteren Abschnitt des Rahmenelementes 2 an der in Fig. 7 mit "C" gekennzeichneten Stelle wird die Anordnung des plattenförmigen Elementes 13, das bevorzugt ein Emblem ist, zu einer Aussparung 12 im Bereich des bogenförmigen Abschnittes 1b des Profilelementes 1 dargestellt.

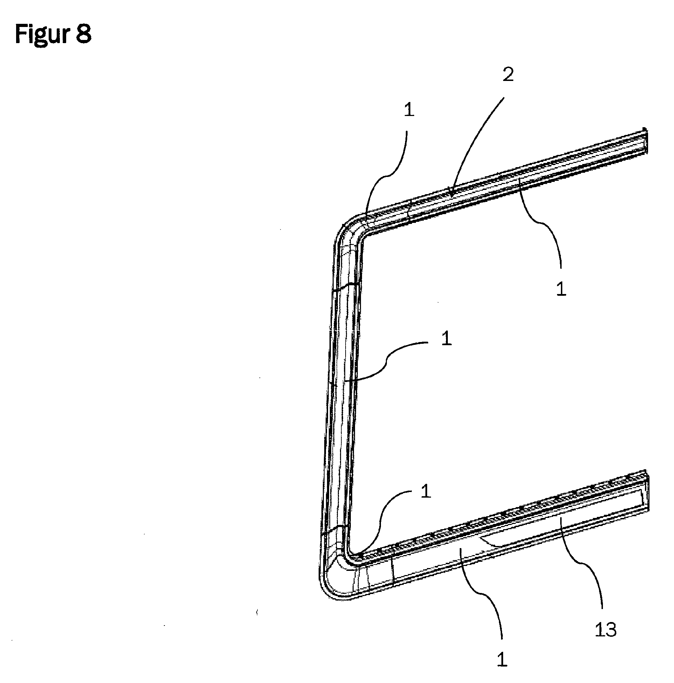

Weiterhin zeigt Fig. 8 eine perspektivische Ansicht des Rahmenelementes 2, das in der gezeigten Darstellung aus fünf Profilelementen zusammengestellt ist. Dabei bilden drei gerade, in Längsrichtung geformte Profilelemente 1 jeweils eine Ober-, Unter- und Seitenkante des Rahmenelementes 2. Weiterhin bilden zwei in Längsrichtung winkelförmige Profilelemente 1 die Eckstücke des Rahmenelementes 2, an denen die geraden Profilelemente 1 angeordnet sind. Die Verbindung der einzelnen Profilelemente miteinander erfolgt bevorzugt mittels einer Klebeverbindung. Weiterhin ist es auch möglich, die Profilelemente mittels einer Steckverbindung zu verbinden. Dies sind besonders bevorzugte Verbindungsmethoden, wenn die Profilelemente 1 aus Kunststoff gefertigt sind. Metallisch ausgebildete Profilelemente 1 können auch miteinander verlötet bzw. miteinander verschweißt werden.

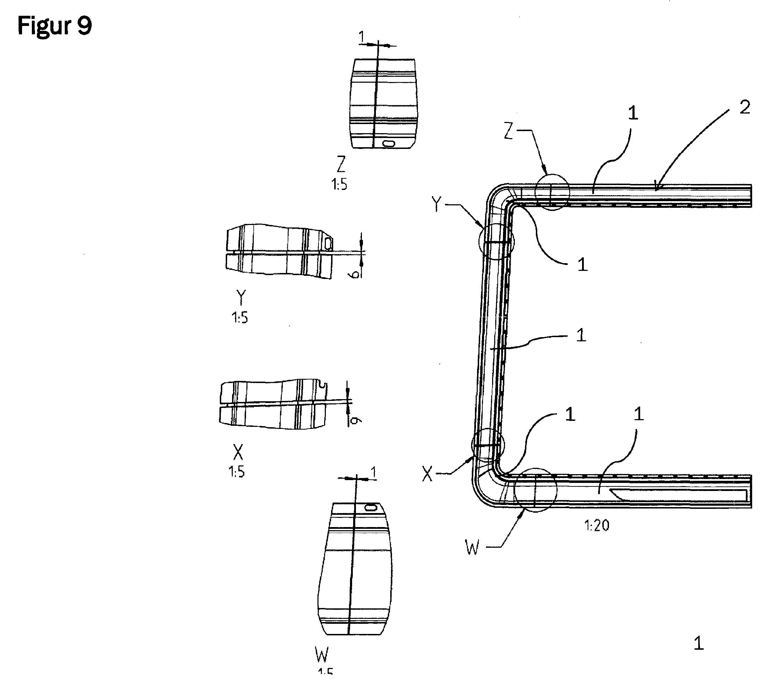

Die Fig. 9 zeigt eine weitere Ansicht des Rahmenelementes 2, gebildet aus den fünf zuvor beschriebenen Profilelementen 1. Die Fügestellen der einzelnen Profilelemente 1 sind in der Fig. 9 mit den Buchstaben W, X, Y und Z gekennzeichnet und jeweils in vergrößerter Darstellung gezeigt. Dies Vergrößerungen zeigen im Wesentlichen, dass ein nahtloser Übergang zwischen den einzelnen Profilelementen 1 zur Bildung des Rahmenelementes 2 vorgesehen ist.

Es werden somit unter anderem die Vorteile erreicht, dass die Profilelemente weniger aufwendig fertigbar sind und sich mittels der Profilelemente weniger komplex ein Rahmenelement bilden lässt, dass unter anderem ein scheibenförmiges Element verspannungsfrei halten kann. Das Rahmenelement kann schnell an einer Tür bzw. einem Kabinenwandabschnitt einer numerisch gesteuerten Werkzeugmaschine befestigt werden und ist zudem mit wenig Aufwand an verschiedene Maschinentypen flexibel anpassbar.

## Patentansprüche

1. Kabinenwandabschnitt einer Kabinenwand (4) einer numerisch gesteuerten Werkzeugmaschine (5), mit
- einer Scheibe (9), die mittels eines Schienenelementes (10) derart an dem Kabinenwandabschnitt befestigt ist, dass die Scheibe (9) eine Aussparung in dem Kabinenwandabschnitt bedeckt, und
- einem scheibenförmigen Element (6), das auf einer maschinenabgewandten Seite der Scheibe (9) angeordnet ist,
wobei ein aus Profilelementen (1) gebildetes Rahmenelement (2) das scheibenförmige Element (6) hält,
**dadurch gekennzeichnet, dass**
das Rahmenelement (2) benachbart zu dem Schienenelement (10) an dem Kabinenwandabschnitt befestigt ist, und
das scheibenförmige Element (6) mittels einer Klettverschlussverbindung an dem Rahmenelement (2) und mittels einer weiteren Klettverschlussverbindung an dem Schienenelement (10) lösbar befestigt ist.

2. Kabinenwandabschnitt gemäß einem der vorhergehenden Ansprüche, **dadurch gekennzeichnet, dass**
ein Querschnittprofil der Profilelemente (1) jeweils aufweist:
- einen Aufnahmeabschnitt (1a) zur Aufnahme eines ersten Befestigungselementes (3),
- einen bogenförmigen Abschnitt (1b), und
- einen auf der Seite der Aussparung angeordneten ersten Verbindungsabschnitt (1c) zur Verbindung des Rahmenelementes (2) mit der Kabinenwand (4) der Werkzeugmaschine (5), wobei
- der bogenförmige Abschnitt (1b) zwischen dem Aufnahmeabschnitt (1) und dem ersten Verbindungsabschnitt (1c) angeordnet ist.

3. Kabinenwandabschnitt gemäß Anspruch 2, **dadurch gekennzeichnet, dass**
das Querschnittprofil der Profilelemente (1) weiterhin einen zweiten Verbindungsabschnitt (1c) aufweist, wobei die Verbindungsabschnitte (1c) am jeweiligen äußeren Ende des Querschnitts des Profilelementes (1) angeordnet sind, und die Verbindungsabschnitte (1c) jeweils eben geformt sind.

4. Kabinenwandabschnitt gemäß Anspruch 2 oder 3, **dadurch gekennzeichnet, dass** der bogenförmige Abschnitt (1b) zumindest einen Bogen aufweist und jeweils an den beiden Enden des bogenförmigen Abschnitts (1b) zumindest ein geknickter Abschnitt (1d) angeordnet ist, wobei
die geknickten Abschnitte (1d) derart ausgebildet sind, dass einer der geknickten Abschnitte mit der Kabinenwand (4) der Werkzeugmaschine (5) und der andere geknickte Abschnitt (1d) mit dem scheibenförmigen Element (6) in Kontakt ist.

5. Kabinenwandabschnitt gemäß einem der Ansprüche 2 bis 4, **dadurch gekennzeichnet, dass**
- auf jeder Seite des bogenförmigen Abschnittes (1b) jeweils ein geknickter Abschnitt (1d) angrenzt, und
- auf einer Seite des Querschnitts des Profilelementes (1) sich an den geknickten Abschnitt (1d) der Aufnahmeabschnitt (1a) anschließt, der eben geformt ist, und an den Aufnahmeabschnitt (1a) höhenversetzt der erste Verbindungsabschnitt (1c) angrenzt, der eben geformt ist, und
- auf der anderen Seite des Querschnitts des Profilelementes (1) sich an den geknickten Abschnitt (1d) ein zweiter Verbindungsabschnitt (1c) angrenzt, der eben geformt ist, wobei
die Verbindungsabschnitte (1c) dazu ausgebildet sind, ein Dichtelement (7) zu halten und/oder ein Verbindungsmittel (8) daran anzuordnen.

6. Kabinenwandabschnitt gemäß einem der Ansprüche 2 bis 5, **dadurch gekennzeichnet, dass**
das erste Befestigungselement (3) an dem Aufnahmeabschnitt (1a) des Profilelementes (1) angeordnet ist,
das scheibenförmige Element (6) ein zweites Befestigungselement (3) aufweist, das dazu ausgebildet ist, mit dem ersten Befestigungselement (3) eine lösbare Verbindung zu bilden, wobei
das scheibenförmige Element (6) außenseitig lösbar mit dem Kabinenwandabschnitt mittels der ersten und zweiten Befestigungsmittel (3) verbunden ist.

7. Kabinenwandabschnitt nach Anspruch 6, **dadurch gekennzeichnet, dass**
die Befestigungselemente (3) Klettverschlusselemente sind, wobei jeweils das erste und das zweite Befestigungselement (3) ein zum ersten oder zweiten Befestigungselement (3) zugeordnetes Gegenstück ist, so dass eine Klettverschlussverbindung bildbar ist.

8. Kabinenwandabschnitt nach einem der Ansprüche 2 bis 7, **dadurch gekennzeichnet, dass**
- zumindest ein Dichtungselement (7) an einem zweiten Verbindungsabschnitt (1c) des Profilelements (1) angeordnet ist, und
- der zweite Verbindungsabschnitt (1c) zusammen mit dem Dichtungselement (7) in Eingriff mit einer ersten Nut (11), die an einer Kabinenwand (4) der Werkzeugmaschine angeordnet ist, steht.

9. Kabinenwandabschnitt nach einem der voranstehenden Ansprüche 2 bis 8, **dadurch gekennzeichnet, dass**
zumindest ein Verbindungsabschnitt (1c) des Profilelementes (1) mittels einer Schraubverbindung mit der Kabinenwand (4) verbunden ist, wobei
bevorzugt der erste Verbindungsabschnitt (1c) des Profilelementes (1) die Schraubverbindung aufweist und ein zweiter Verbindungsabschnitt (1c) in eine erste Nut (11) eingreift, die an einer Kabinenwand (4) der Werkzeugmaschine angeordnet ist.

10. Kabinenwandabschnitt nach einem der voranstehenden Ansprüche,
**dadurch gekennzeichnet, dass**
- die Scheibe (9) an Rändern der Aussparung mittels des Schienenelementes (10), das eine zweite Nut (12) zur Aufnahme einer Kante der Scheibe (9) aufweist, mit der Kabinenwand (4) verbunden ist, wobei
das Schienenelement (10) mittels einer Klebe- und/oder Schraubverbindung mit der Kabinenwand (4) befestigt ist.

11. Kabinenwandabschnitt nach einem der Ansprüche 6 bis 10, **dadurch gekennzeichnet, dass**
ein weiteres Befestigungselement (3) und ein weiteres Dichtungselement (7) an dem Schienenelement (10) angeordnet sind, und das Schienenelement (10) benachbart zu dem Rahmenelement (2) an der Kabinenwand (4) befestigt ist,
wobei das scheibenförmige Element (6) mittels der Befestigungselemente (3) auf einem Abschnitt des Schienenelementes (10) und auf einem Abschnitt des Aufnahmeabschnittes (1a) des mittels des Profilelementes (1) gebildeten Rahmenelementes (2) gehalten ist.

12. Kabinenwandabschnitt nach Anspruch 11, **dadurch gekennzeichnet, dass**
das scheibenförmige Element (6) mittels der Befestigungsmittel (3), die jeweils an dem Rahmenelement (2) und dem Schienenelement (10) vorgesehen sind, lösbar mit dem Rahmenelement (2) und dem Schienenelement (10) derart befestigt ist, dass das scheibenförmige Element (6) auf dem ersten Befestigungselement (3) und auf einem der geknickten Abschnitte (1d) des Profilelementes (1) des Rahmenelementes (2) und auf dem weiteren Befestigungselement (3) und dem weiteren Dichtungselement (7), die an dem Schienenelement (10) angeordnet sind, aufliegt.

13. Kabinenwandabschnitt nach einem der voranstehenden Ansprüche,
**dadurch gekennzeichnet, dass**
das scheibenförmige Element (6) im Bereich der Aussparung der Kabinenwand (4) einen transparenten Innenabschnitt aufweist, und im Bereich der Ränder der Aussparung der Kabinenwand (4) einen intransparenten Randabschnitt aufweist, der bevorzugt schwarz oder weiß gefärbt ist.

14. Kabinenwandabschnitt nach einem der voranstehenden Ansprüche 2 bis 13, **dadurch gekennzeichnet, dass** ein Abschnitt des Rahmenelementes (2) im Bereich des bogenförmigen Abschnitts (1b) eine Aussparung (12) zur Aufnahme zumindest eines im Wesentlichen plattenförmigen Elementes (13) aufweist.

## Claims

1. A cabin wall section of a cabin wall (4) of a numerically controlled machine tool (5), comprising
- a pane (9) which is fastened to said cabin wall section by means of a rail element (10), such that a non-transparent peripheral section covers a recess in said cabin wall section, and
- a disc-shaped element (6) which is disposed on a side of said pane (9) facing away from a machine,
wherein a frame element (2) formed by profile elements (1) holds said disc-shaped element (6),
**characterized in that**
said frame element (2) is fastened to said cabin wall section adjacent to said rail element (10), and
said disc-shaped element (6) is detachably fastened to said frame element (2) by means of a hook and loop connection and to said rail element (10) by means of a further hook and loop connection.

2. Cabin wall section according to claim 1, **characterized in that** a cross sectional profile of said profile element (1) comprises:
- a receiving section (1a) for receiving a first fastening element (3),
- an arc-shaped section (1b), and
- a first connecting section (1c) disposed on the side of said recess for connecting said frame element (2) to said cabin wall (4) of said machine tool (5), wherein
- said arc-shaped section (1b) is disposed between said receiving section (1) and said first connecting section (1c).

3. Cabin wall section according to claim 2, **characterized in that**
said cross sectional profile of said profile elements (1) further comprises a second connecting section (1c), wherein said connecting sections (1c) are disposed on the respective outer end of the cross section of said profile element (1), and each of said connecting sections (1c) is planar in shape.

4. Cabin wall section according to claim 2 or 3, **characterized in that**
said arc-shaped section (1b) has at least one arc and at least one bent section (1d) is disposed at the two ends of said arc-shaped section (1b), wherein
said bent sections (1d) are formed such that one of said bent sections is in contact with said cabin wall (4) of said machine tool (5) and the other bent section (1d) is in contact with said disc-shaped element (6).

5. Cabin wall section according to one of claims 2 to 4, **characterized in that**
- on each side of said arc-shaped section (1b), one bent section (1d) is adjoined, and
- on one side of the cross section of said profile element (1), said receiving section (1a), which is planar in shape, is adjoined to said bent section (1d), and said first connecting section (1c), which is planar in shape, is adjoined, offset in height, to said receiving section (1a), and
- on the other side of the cross section of said profile element (1), a second connecting section (1c), which is planar in shape, is adjoined to said bent section (1d) wherein
said connecting sections (1c) are configured to hold a sealing element (7) and/or to dispose a connecting means (8) thereat.

6. Cabin wall section according to one of claims 2 to 5, **characterized in that**
said first fastening element (3) is disposed at said receiving section (1a) of said profile element (1),
said disc-shaped element (6) comprises a second fastening element (3) configured to form a releasable connection with said first fastening element (3), wherein
said disc-shaped element (6) is externally detachably connected to said cabin wall section by means of said first and second fastening means (3).

7. Cabin wall section according to claim 6, **characterized in that**
said fastening elements (3) are hook and loop fastening elements,
wherein said first and second fastening elements (3) each are a counterpart associated to the first or second fastening element (3), so that a hook and loop connection can be formed.

8. Cabin wall section according to any one of claims 2 to 7, **characterized in that**
- at least one sealing element (7) is disposed at a second connecting section (1c) of said profile element (1), and
- said second connecting section (1c), along with said sealing element (7), is engaged in a first groove (11) disposed at a cabin wall (4) of said machine tool.

9. Cabin wall section according to any one of the preceding claims 2 to 8, **characterized in that**
at least one connecting section (1c) of said profile element (1) is connected to said cabin wall (4) by means of a screw connection,
wherein
preferably, said first connecting section (1c) of said profile element (1) includes the screw connection and a second connecting section (1c) engages with a first groove (11) disposed at a cabin wall (4) of said machine tool.

10. Cabin wall section according to any one of the preceding claims, **characterized in that**
- said pane (9) is connected to said cabin wall (4) at the edges of said recess by means of said rail member (10), which includes a second groove (12) for receiving an edge of said pane (9), wherein
said rail element (10) is fastened to said cabin wall (4) by means of an adhesive and/or screw connection.

11. Cabin wall section according to any one of claims 6 to 10, **characterized in that**
a further fastening element (3) and a further sealing element (7) are disposed at said rail member (10), and said rail member (1) is fastened to said cabin wall (4) adjacent to said frame element (2),
wherein said disc-shaped element (6) is held, by means of said fastening elements (3), on a section of said rail element (10) and on a section of said receiving section (1a) of said frame element (2) formed by means of said profile element (1).

12. Cabin wall section according to claim 12, **characterized in that**
said disc-shaped element (6) is detachably fastened to said frame element (2) and said rail element (10) by means of said fastening means (3) each provided at said frame element (2) and said rail member (10), such that said disc-shaped element (6) is seated on said first fastening element (3) and on one of said bent sections (1d) of said profile element (1) of said frame element (2) and on said further fastening element (3) and said further sealing element (7), which are disposed at said rail member (10).

13. Cabin wall section according to any one of the preceding claims, **characterized in that**
said disc-shaped element (6) includes a transparent inner section in the region of said recess of said cabin wall (4) and a non-transparent peripheral section preferably coloured black or white in the region of the edges of said recess of said cabin wall (4).

14. Cabin wall section according to any one of the preceding claims 2 to 13, **characterized in that** a section of said frame element (2) in the region of said arc-shaped section (1b) includes a recess (12) for receiving at least one substantially plate-shaped element (13).

## Revendications

1. Section de paroi de cabine d'une paroi de cabine (4) d'une machine-outil (5) à commande numérique, comportant
- une vitre (9) qui est fixée sur la section de paroi de cabine au moyen d'un élément formant rail (10) de telle sorte que la vitre (9) recouvre une échancrure dans la section de paroi de cabine, et
- un élément (6) en forme de vitre qui est agencé sur le côté de la vitre (9) détourné de la machine,
un élément formant cadre (2) formé par des éléments profilés (1) retenant l'élément (6) en forme de vitre,
**caractérisée en ce que**
l'élément formant cadre (2) est fixé sur la section de paroi de cabine au voisinage de l'élément formant rail (10), et
l'élément (6) en forme de vitre est fixé de façon détachable sur l'élément formant cadre (2) au moyen d'une liaison auto-agrippante et sur l'élément formant rail (10) au moyen d'une autre liaison auto-agrippante.

2. Section de paroi de cabine selon l'une des revendications précédentes, **caractérisée en ce que**
un profil de section transversale des éléments profilés (1) comprend respectivement :
- une partie de logement (1a) pour loger un premier élément de fixation (3),
- une partie en forme arquée (1b), et
- une première partie de liaison (1c) agencée sur le côté de l'échancrure pour relier l'élément formant cadre (2) à la paroi de cabine (4) de la machine-outil (5),
dans laquelle
- la partie en forme arquée (1b) est agencée entre la partie de logement (1) et la première partie de liaison (1c).

3. Section de paroi de cabine selon la revendication 2, **caractérisée en ce que**
le profil de section transversale des éléments profilés (1) comprend en outre une seconde partie de liaison (1c), les parties de liaison (1c) étant agencées à l'extrémité extérieure respective de la section transversale de l'élément profilé (1), et les parties de liaison (1c) étant formées chacune de façon plane.

4. Section de paroi de cabine selon la revendication 2 ou 3, **caractérisée en ce que**
la partie en forme arquée (1b) comprend au moins un arceau, et au moins une partie repliée (1d) respective est agencée aux deux extrémités de la partie en forme arquée (1b),
les parties repliées (1d) étant réalisées de telle sorte que l'une des parties repliées est en contact avec la paroi de cabine (4) de la machine-outil (5) et l'autre partie repliée (1d) est en contact avec l'élément (6) en forme de vitre.

5. Section de paroi de cabine selon l'une des revendications 2 à 4, **caractérisée en ce que**
- une partie repliée (1d) est adjacente à chaque côté de la partie en forme arquée (1 b),
- la partie de logement (1a) de forme plane se raccorde à la partie repliée (1d) sur un côté de la section transversale de l'élément profilé (1), et, de façon décalée en hauteur, la première partie de liaison (1c) de forme plane est adjacente à la partie de logement (1a), et
- une seconde partie de liaison (1c) de forme plane est adjacente à la partie repliée (1d) sur l'autre côté de la section transversale de l'élément profilé (1),
les parties de liaison (1c) étant réalisées pour y maintenir un élément d'étanchéité (7) et/ou pour y agencer un moyen de liaison (8).

6. Section de paroi de cabine selon l'une des revendications 2 à 5, **caractérisée en ce que**
le premier élément de fixation (3) est agencé sur la partie de logement (1a) de l'élément profilé (1),
l'élément (6) en forme de vitre comprend un second élément de fixation (3) qui est réalisé pour former une liaison détachable avec le premier élément de fixation (3),
l'élément (6) en forme de vitre étant relié du côté extérieur et de façon détachable à la section de paroi de cabine au moyen des premier et second moyens de fixation (3).

7. Section de paroi de cabine selon la revendication 6, **caractérisée en ce que**
les éléments de fixation (3) sont des éléments de fermeture auto-agrippante, les premier et second éléments de fixation (3) étant un élément antagoniste associé au premier ou second élément de fixation (3), de manière à pouvoir former la liaison de fermeture auto-agrippante.

8. Section de paroi de cabine selon l'une des revendications 2 à 7, **caractérisée en ce que**
- au moins un élément d'étanchéité (7) est agencé sur une seconde partie de liaison (1 c) de l'élément profilé (1), et
- la seconde partie de liaison (1c), conjointement avec l'élément d'étanchéité (7), est en engagement avec une première gorge (11) qui est ménagée sur une paroi de cabine (4) de la machine-outil.

9. Section de paroi de cabine selon l'une des revendications précédentes 2 à 8, **caractérisée en ce que**
au moins une partie de liaison (1c) de l'élément profilé (1) est reliée à la paroi de cabine (4) au moyen d'une liaison par vissage, et
de préférence la première partie de liaison (1c) de l'élément profilé (1) présente la liaison par vissage, et une seconde partie de liaison (1c) vient s'engager dans la première gorge (11) qui est ménagée sur une paroi de cabine (4) de la machine-outil.

10. Section de paroi de cabine selon l'une des revendications précédentes, **caractérisée en ce que**
- la vitre (9) est reliée à la paroi de cabine (4) au niveau des bords de l'échancrure au moyen de l'élément formant rail (10) qui présente la seconde gorge (12) pour recevoir une arête de la vitre (9), et
l'élément formant rail (10) est fixé avec la paroi de cabine (4) au moyen d'une liaison par collage et/ou par vissage.

11. Section de paroi de cabine selon l'une des revendications 6 à 10, **caractérisée en ce que**
un autre élément de fixation (3) et un autre élément d'étanchéité (7) sont agencés sur l'élément formant rail (10), et l'élément formant rail (10) est fixé sur la paroi de cabine (4) au voisinage de l'élément formant cadre (2), et l'élément (6) en forme de vitre est retenu sur une partie de l'élément formant rail (10) au moyen des éléments de fixation (3) et sur un tronçon de la partie de logement (1a) de l'élément formant cadre (2) formé au moyen de l'élément profilé (1).

12. Section de paroi de cabine selon la revendication 11, **caractérisée en ce que** l'élément (6) en forme de vitre est fixé de façon détachable avec l'élément formant cadre (2) et avec l'élément formant rail (10) par les moyens de fixation (3) qui sont prévus sur l'élément formant cadre (2) et sur l'élément formant rail (10) respectivement, de telle sorte que l'élément (6) en forme de vitre repose sur le premier élément de fixation (3) et sur l'une des parties repliées (1d) de l'élément profilé (1) de l'élément formant cadre (2) et sur l'autre élément de fixation (3) et l'autre élément d'étanchéité (7) qui sont agencés sur l'élément formant rail (10).

13. Section de paroi de cabine selon l'une des revendications précédentes, **caractérisée en ce que**
au niveau de l'échancrure de la paroi de cabine (4), l'élément (6) en forme de vitre présente une partie intérieure transparente, et au niveau des bords de l'échancrure de la paroi de cabine (4), il présente une partie de bordure non transparente qui est de préférence colorée en noir ou en blanc.

14. Section de paroi de cabine selon l'une des revendications précédentes 2 à 13, **caractérisée en ce qu'**au niveau de la partie de forme arquée (1b), une partie de l'élément formant cadre (2) présente une échancrure (12) pour loger au moins un élément (13) sensiblement en forme de plaque.
